# EUROPEAN PATENT APPLICATION

(11) **EP 4 401 077 A1**
(43) Date of publication of application: **17.07.2024**
(21) Application number: 23220251.5
(22) Date of filing: 27.12.2023
(51) Int. Cl.: G10L 25/51, G06F 3/16, G08B 1/08, G06F 18/24

(54) **METHOD AND APPARATUS FOR ENVIRONMENTAL SITUATION RECOGNITION AND INTERACTION**

(30) Priority: 13.01.2023 CN 202310064128
(71) Applicant: Optoma Coporation, New Taipei City (TW)
(72) Inventor: Hsieh, Yen-Jui, 231633 New Taipei City (TW)
(74) Representative: Ter Meer Steinmeister & Partner

(57) **Abstract**

A method and an apparatus for environmental situation recognition and interaction are provided. In the method, an environmental audio is obtained by detecting an ambient sound around the environmental situation recognition and interaction apparatus through a sound receiver. At least one interactive action corresponding to at least one environmental situation is implemented according to the environmental audio through the processing apparatus controlling the environmental situation recognition and interaction apparatus. A setting interface is displayed by a display. The at least one environmental situation and the at least one interactive action in the at least one environmental situation are set through the setting interface.

## Description

This application claims the priority benefit of China application serial no. 202310064128.3, filed on January 13, 2023.

### BACKGROUND

### Technical Field

The invention relates to an interaction method and an electronic device, and more particularly, to a method for environmental situation recognition and interaction, and a display apparatus using the method.

### Description of Related Art

The Internet of things (IoT) is to set independent electronic tags for electronic devices or items, and on the basis of connecting to a network, data is transmitted through the network, so that these electronic devices or items may communicate with each other. The IoT technology may be combined with a voice recognition technology to recognize voice commands issued by users through pre-established natural language recognition modules or interfaces, and provide users with voice control of IoT devices.

However, performance of the IoT device is usually limited, and the above-mentioned voice control needs to be bound to devices and implemented in a network environment. Even if a voice recognition module is installed on the IoT device, in order to achieve accurate recognition, it is necessary to pre-set keywords and their corresponding actions. Therefore, after obtaining the IoT device, users often need to set voice commands and corresponding functions thereof for various situations or conditions by themselves, which makes it impossible to implement customization of device functions.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The invention relates to a method for environmental situation recognition and interaction and an environmental situation recognition and interaction apparatus, by recognizing a feature in an environmental audio to determine an environmental situation around the environmental situation recognition and interaction apparatus and implementing an interactive action corresponding to the recognized situation, so as to provide a customized environmental audio recognition function.

Other objects and advantages of the present invention may be further understood from the technical features disclosed herein.

The object is solved by the features of the independent claims. Preferred embodiments are given in the dependent claims.

In order to achieve one, a part, or all of the objects or other objects, the invention provides a method for environmental situation recognition and interaction adapted to an environmental situation recognition and interaction apparatus with a processing apparatus, a sound receiver and a display. The following steps of the method includes: obtaining an environmental audio by detecting an ambient sound around the environmental situation recognition and interaction apparatus through the sound receiver; controlling the environmental situation recognition and interaction apparatus to implement at least one interactive action corresponding to at least one environmental situation according to the environmental audio through the processing apparatus; and displaying a setting interface by the display and setting the at least one environmental situation and the at least one interactive action in the at least one environmental situation through the setting interface.

In some embodiments, the method further may include: filtering human voices from the environmental audio through the processing apparatus;
In some embodiments, the method further may include extracting a feature from the filtered environmental audio through the processing apparatus
In some embodiments, the method further may include: determining, through the processing apparatus, the at least one environmental situation around the environmental situation recognition and interaction apparatus based on a pattern of occurrence of the feature.

In some embodiments, the environmental situation recognition and interaction apparatus may further include a decibel meter.

In some embodiments, the method may further include detecting a sound volume of the ambient sound through the decibel meter.

In some embodiments, the method may further include determining the at least one environmental situation according to the sound volume and the pattern of occurrence of the feature through the processing apparatus.

In some embodiments, the step of determining the at least one environmental situation according to the sound volume and the pattern of occurrence of the feature may include determining the at least one environmental situation to be an in class situation in response to gradual decrease of the sound volume and an occurrence frequency of the feature exceeding a predetermined value within a predetermined period, and determining the environmental situation to be an after class situation in response to a difference between a high and low sections of the sound volume exceeding a threshold value, and the occurrence frequency of the feature exceeding the predetermined value within the predetermined period.

In some embodiments, the environmental situation recognition and interaction apparatus may further include a touch panel.

In some embodiments, a touch screen may be provided including the touch panel and the display.

In some embodiments, the method may further include detecting at least one trigger point through the touch screen, determining the at least one environmental situation according to the at least one trigger point, the sound volume, and the pattern of occurrence of the feature, and establishing a learning model through the processing apparatus, and using the learning model to determine a current environmental situation according to the currently detected at least one trigger point, the sound volume, and the feature.

In some embodiments, the method may further include displaying a prompt message and receiving a feedback in response to the prompt message through the touch screen, determining the at least one environmental situation according to the at least one trigger point, the feedback, the sound volume, and the pattern of occurrence of the feature, and establishing the learning model through the processing apparatus, and using the learning model to determine a current environmental situation according to the currently detected at least one trigger point, the feedback, the sound volume, and the feature.

In some embodiments, the method may further include obtaining an audio file of a specific audio occurred in a specific situation, and analyzing the audio file to obtain a first feature of the specific audio, comparing a pattern of occurrence of a second feature with a pattern of occurrence of the first feature, and determining that the at least one environmental situation is the specific situation when a comparison result is matched. The second feature is the feature.

In some embodiments, the pattern of occurrence of the feature may include at least one of a number of times, a frequency, a peak value, an interval time, and a duration of occurrence of the feature.

In some embodiments, the at least one interactive action may include unlocking or locking the environmental situation recognition and interaction apparatus, or displaying a notification.

In another aspect of the invention an environmental situation recognition and interaction apparatus is provided including a sound receiver, a processing apparatus and a display. A sound receiver is configured to detect an ambient sound around the environmental situation recognition and interaction apparatus to obtain an environmental audio.

A processing apparatus is electrically coupled to the sound receiver. The processing apparatus is configured to control the environmental situation recognition and interaction apparatus to implement at least one interactive action corresponding to at least one environmental situation according to the environmental audio.

A display is electrically coupled to the processing apparatus. The display is configured to display a setting interface. The at least one environmental situation and the at least one interactive action in the at least one environmental situation are set by the setting interface.

In some embodiments, the environmental situation recognition and interaction apparatus may further include a storage device.

The storage device may be configured to storage a processing module.

The processing apparatus may be electrically coupled to the storage device.

The processing apparatus may be configured to receive the environmental audio transmitted from the sound receiver.

The processing apparatus may be configured to load the processing module.

The processing apparatus may be configured to filter human voices from the environmental audio.

The processing apparatus may be configured to extract a feature from the filtered environmental audio.

The processing apparatus may be configured to determine at least one environmental situation around the environmental situation recognition and interaction apparatus based on a pattern of occurrence of the feature.

In some embodiments, the environmental situation recognition and interaction apparatus may further include a decibel meter configured to detect a sound volume of the ambient sound.

The processing apparatus may be configured to determine the at least one environmental situation according to the sound volume and the pattern of occurrence of the feature.

In some embodiments, the processing apparatus may be configured to determine the at least one environmental situation to be an in class situation in response to gradual decrease of the sound volume and an occurrence frequency of the feature exceeding a predetermined value within a predetermined period, and determine the at least one environmental situation to be an after class situation in response to a difference between a high and low sections of the sound volume exceeding a threshold value, and the occurrence frequency of the feature exceeding the predetermined value within the predetermined period.

In some embodiments, the environmental situation recognition and interaction apparatus may further include a touch screen configured to detect at least one trigger point.

The touch screen may include a touch panel and the display.

The processing apparatus may be configured to determine the at least one environmental situation according to the at least one trigger point, the sound volume, and the pattern of occurrence of the feature, and establish a learning model, and use the learning model to determine a current environmental situation according to the currently detected at least one trigger point, the sound volume, and the feature.

In some embodiments, the touch screen may be configured to display a prompt message.

The processing apparatus may be configured to receive a feedback in response to the prompt message and determine the at least one environmental situation according to the at least one trigger point, the feedback, the sound volume, and the pattern of occurrence of the feature, and establish a learning model, and uses the learning model to determine a current environmental situation according to the currently detected at least one trigger point, the feedback, the sound volume, and the feature.

In some embodiments, the processing apparatus may further obtain an audio file of a specific audio occurred in a specific situation, analyzes the audio file to obtain a first feature of the specific audio, compares a pattern of occurrence of a second feature with a pattern of occurrence of the first feature, and determines that the at least one environmental situation is the specific situation when a comparison result is matched. The second feature is the above-mentioned feature.

In some embodiments, the pattern of occurrence of the feature may include at least one of a number of times, a frequency, a peak value, an interval time, and a duration of occurrence of the feature.

In some embodiments, the at least one interactive action may include unlocking or locking the environmental situation recognition and interaction apparatus, or displaying a notification.

Based on the above, the invention realizes offline audio recognition and interactive functions without network connection. In this way, customized environmental situation recognition and interaction functions may be provided to the environmental situation recognition and interaction apparatus.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of situation setting according to an embodiment of the invention.
FIG. 2 is a block diagram of an environmental situation recognition and interaction apparatus according to an embodiment of the invention.
FIG. 3 is a flowchart of a method for environmental situation recognition and interaction according to an embodiment of the invention.
FIG. 4 is a block diagram of an environmental situation recognition and interaction apparatus according to an embodiment of the invention.
FIG. 5 is a flowchart of a method for environmental situation recognition and interaction according to an embodiment of the invention.
FIG. 6 is a flowchart of a method for environmental situation recognition and interaction according to an embodiment of the invention.
FIG. 7 is a flowchart of a method for environmental situation recognition and interaction according to an embodiment of the invention.
FIG. 8 is a schematic diagram of a method for environmental situation recognition and interaction according to an embodiment of the invention.
FIG. 9 is a schematic diagram of training a learning model according to an embodiment of the invention.

### DESCRIPTION OF The EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

The embodiment of the invention is aimed at a use environment of an environmental situation recognition and interaction apparatus, by detecting a change of an ambient sound or an audio file of a specific audio obtained from an external device, audio features under various environmental situations are learned to set corresponding interactive actions. In an actual application, an environmental audio is obtained by collecting ambient sound around the environmental situation recognition and interaction apparatus, and a feature in the environmental audio is extracted, and then a current environmental situation is determined based on a pattern of occurrence of the feature in the environmental audio, so as to implement an interactive action corresponding to the determined environmental situation. In this way, a customized environmental situation recognition and interaction function is provided.

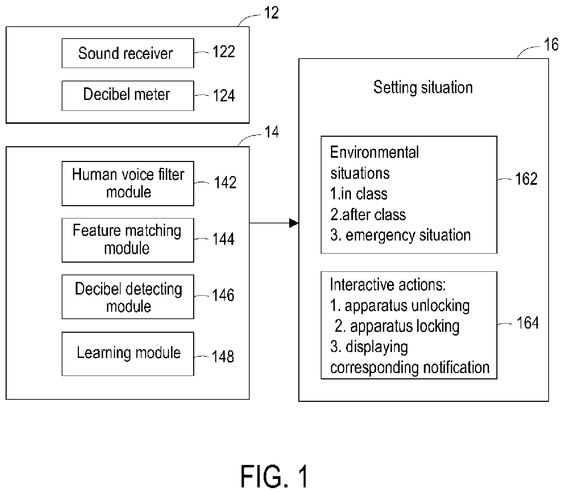

FIG. 1 is a schematic diagram of situation setting according to an embodiment of the invention. Referring to FIG. 1, the embodiment is an environmental situation recognition and interaction apparatus used to provide a user with setting of an environmental situation and interactive action for an environment, where the environmental situation recognition and interaction apparatus includes a sensing module 12 and processing module 14. The sensing module 12 includes at least one of a sound receiver 122 and a decibel meter 124. Where, the sound receiver 122 is, for example, a microphone or a microphone array composed of multiple microphones, which is configured to receive an ambient sound around the environmental situation recognition and interaction apparatus, and convert the ambient sound into an environmental audio for providing to the processing module for processing. The decibel meter 124 may detect environmental noise, convert the environmental noise into an electrical signal, and convert the electrical signal into a numerical value (with a unit of decibel) of a noise level to serve as a sound volume of the ambient sound.

The processing module 14 includes at least one of a human voice filter module 142, a feature matching module 144, a decibel detecting module 146, a learning module 148 and other software modules. The abovementioned modules may be at least one program. Where, the human voice filter module 142 obtains the environmental audio from the ambient sound sensed by the sound receiver 122, and filters human voices in the environmental audio. The feature matching module 144 is configured to extract features from the environmental audio where the human voices have been filtered, and match a pattern of occurrence of the extracted features with patterns of audio features in various environmental situations. The pattern includes a number of times, a frequency, a peak value, an interval time, a duration or a combination thereof of occurrence of the features or the audio features, which is not limited by the invention. The decibel detecting module 146 uses the decibel meter 124 to detect the sound volume of the ambient sound around the environmental situation recognition and interaction apparatus, and provides the sound volume to the feature matching module 144 as one of the bases for determining the environmental situation.

For the features extracted by the feature matching module 144, the user may pre-set at least one environmental situation 162 (such as in class, after class, emergency situation) and at least one interactive action 164 (such as environmental situation recognition and interaction apparatus unlocking, apparatus locking, displaying corresponding notifications and warning images) corresponding to the above-mentioned environmental situations in a setting situation module 16. The setting situation module 16 also may be at least one program. When the environmental situation recognition and interaction apparatus is used, the feature matching module 144 implements a feature matching method to identify the environmental situation from the audio features of the current environment, so as to produce an interactive action.

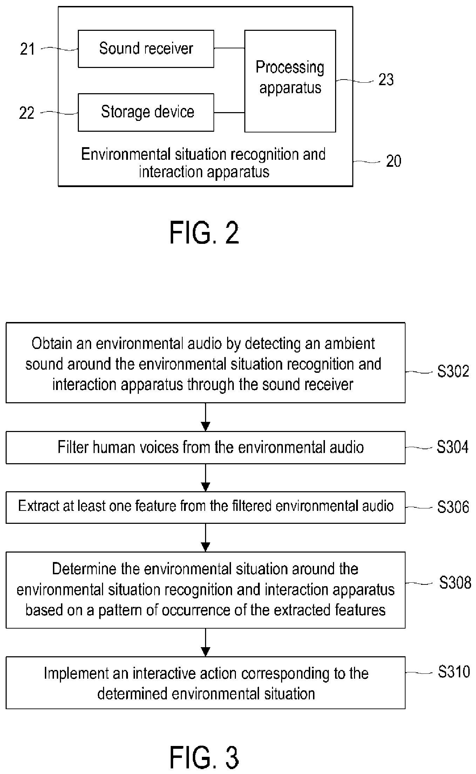

According to the features extracted by the feature matching module 144, the sound volume obtained by the decibel detecting module 146 and the environmental situations and interactive actions set in the setting situation module 16 by the user, the learning module 148 may establish a learning model to learn associations between the above parameters and settings. In some embodiments, the learning module 148 may further learn operating actions of the user in different environmental situations and use the same as one of the bases for determining the environmental situation. It should be noted that an environmental situation recognition and interaction apparatus 20 in FIG. 2 further has a display to display a setting interface. The setting interface displays the setting situation module 16, which allows the user to freely set the environmental situations 162 (such as in class, after class, emergency situation) and the corresponding interactive actions 164 corresponding to the above environmental situations. The setting situation module 16 also belongs to a program module executed by a processing apparatus 23. In some embodiments, the display of the environmental situation recognition and interaction apparatus 20 displays a setting interface and the at least one environmental situation and the at least one interactive action in the at least one environmental situation are set through the setting interface.

FIG. 2 is a block diagram of an environmental situation recognition and interaction apparatus according to an embodiment of the invention. Refer to FIG. 2, the environmental situation recognition and interaction apparatus 20 of the embodiment of the invention is, for example, an electronic device capable of interacting with users such as a television, a projector, an electronic whiteboard, an interactive flat panel (IFP), etc., with a computing power. The environmental situation recognition and interaction apparatus 20 include a sound receiver 21, a storage device 22 and the processing apparatus 23, etc.. The processing apparatus 23 may be electrically coupled the sound receiver 21, a storage device 22 and a display. Functions thereof are as follows:

The sound receiver 21 is, for example, a variety of microphones such as a moving-coil microphone, a capacitance microphone, an MEMS microphone, etc., or a microphone array composed of multiple microphones, which is used to detect and receive an ambient sound around the environmental situation recognition and interaction apparatus 20 to obtain an environmental audio. In some embodiments, the sound receiver 122 is, for example, a directional microphone, which may detect the ambient sound of a specific direction or angle.

The storage device 22 is, for example, any type of a fixed or mobile random access memory (RAM), read-only memory (ROM), flash memory, hard disk or similar component or a combination of the above components, and is used to store program modules that may be executed by the processing apparatus 23, for example, at least one of the human voice filter module 142, the feature matching module 144, the decibel detecting module 146, the learning module 148 in the processing module 14, and the setting situation module 16. In some embodiments, the storage device 22 may also store the environmental audio sensed by the sound receiver 21, which is not limited by the invention.

The processing apparatus 23 is, for example, at least one processor. The processor may be a central processing unit (CPU), or other programmable general purpose or special purpose microprocessor, microcontroller, digital signal processor (DSP), programmable controller, application specific integrated circuits (ASIC), programmable logic device (PLD) or other similar devices or a combination of these devices, but the embodiment is not limited thereto. In the embodiment, the processing apparatus 23 may load a program module from the storage device 22 to execute the method for environmental situation recognition and interaction of the embodiment of the invention.

FIG. 3 is a flowchart of a method for environmental situation recognition and interaction according to an embodiment of the invention. Referring to FIG. 2 and FIG. 3 at the same time, the method of the embodiment is applicable to the environmental situation recognition and interaction apparatus 20 of FIG. 2. Detailed steps of the method for environmental situation recognition and interaction of the embodiment will be described below with reference of various components of the environmental situation recognition and interaction apparatus 20.

In step S302, the sound receiver 21 is used to detect an ambient sound around the environmental situation recognition and interaction apparatus 20, and convert the ambient sound into an environmental audio to obtain the environmental audio.

In step S304, the processing apparatus 23 loads the human voice filter module 142 from the storage device 22, and filters human voices in the environmental audio by using the human voice filter module 142. In some embodiments, the processing apparatus 23 filters the human voices by deleting a specific frequency band related to the human voices in the environmental audio, and the specific frequency band is, for example, a frequency band between 82 hertz (Hz) and 1100 Hz.

In some embodiments, the processing apparatus 23 controls the environmental situation recognition and interaction apparatus to implement at least one interactive action corresponding to at least one environmental situation according to the environmental audio.

In step S306, the processing apparatus 23 is used to extract at least one feature from the filtered environmental audio. The at least one feature is, for example, at least one of a peak, a trough, or a waveform of a specific shape of the environmental audio, and the number of the features is not limited here.

In step S308, the processing apparatus 23 determines the environmental situation around the environmental situation recognition and interaction apparatus 20 according to a pattern of occurrence of the extracted features. The pattern of occurrence of the features includes at least one of a number of times, a frequency, a peak value, an interval time and a duration of occurrence of the feature. For example, if the environmental audio has peaks exceeding a specific number of peaks at predetermined intervals within 1 minute, it may be determined that the environmental audio has a bell pattern, which means that the environmental situation of the environmental situation recognition and interaction apparatus 20 is after class.

In step S310, the processing apparatus 23 implements an interactive action corresponding to the determined environmental situation. The interactive action includes unlocking or locking the environmental situation recognition and interaction apparatus 20, or displaying a notification corresponding to the determined environmental situation by the environmental situation recognition and interaction apparatus 20. For example, when the processing apparatus 23 determines that the environmental situation is after class, the environmental situation recognition and interaction apparatus 20 may be locked or a subject and a class time of a next class may be displayed through the environmental situation recognition and interaction apparatus 20.

In some embodiments, the processing apparatus 23 controls the display to display a setting interface, and sets at least one environmental situation and the at least one interactive action in the at least one environmental situation through the setting interface.

Through the above method, the environmental situation recognition and interaction apparatus 20 may determine the environmental situation by sensing a change of the environmental audio, and automatically implement the corresponding interactive action. In this way, customization of the functions of the environmental situation recognition and interaction apparatus 20 may be realized.

In some embodiments, in addition to sensing changes of an environmental volume, the environmental situation recognition and interaction apparatus 20 may further detect an operating action of the user and use the same as a basis for determining the environmental situation, so as to determine the environmental situation more accurately.

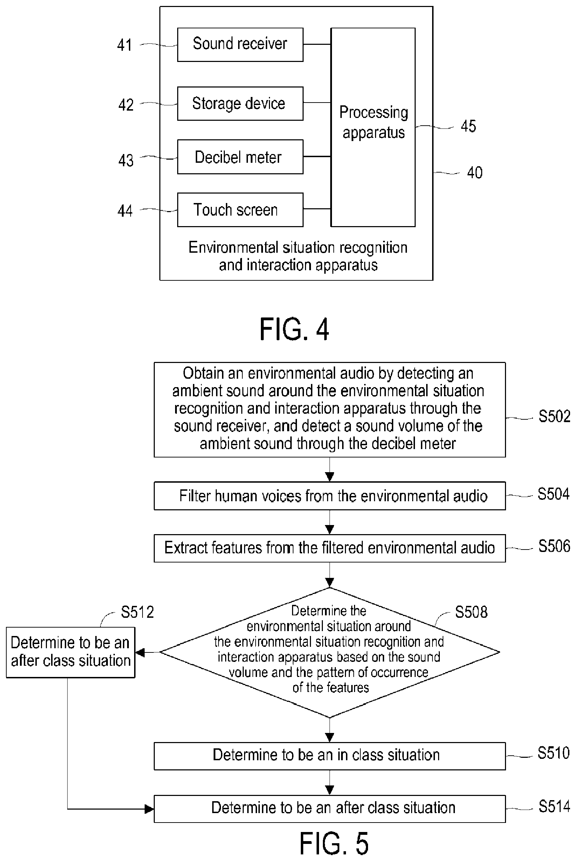

FIG. 4 is a block diagram of an environmental situation recognition and interaction apparatus according to an embodiment of the invention. Referring to FIG. 4, an environmental situation recognition and interaction apparatus 40 is, for example, an electronic device capable of interacting with users such as a television, a projector, an electronic whiteboard, an interactive flat panel, etc.

The environmental situation recognition and interaction apparatus 40 includes components such as a sound receiver 41, a storage device 42, a decibel meter 43, a touch screen 44, a processing apparatus 45, etc. Where, the sound receiver 41, the storage device 42, the processing apparatus 45 and the decibel meter 43 are the same or similar to the sound receiver 21, the storage device 22, the processing apparatus 23 and the decibel meter 124 of the aforementioned embodiment, so that types and functions thereof are not repeated here.

The touch screen 44 is, for example, composed of a touch panel and the display (likes the display of FIG.2), and is used for displaying images and sensing at least one trigger point triggered by the user. The touch panel includes, for example, resistive, capacitive, optical or other types of touch detection elements, which may be used to detect the user's touch operation. The display, for example, a screen that uses a liquid crystal display (LCD), a light-emitting diode (LED) display, a field emission display (FED) or other types of panels as a display panel, and uses LEDs as a backlight module. The embodiment does not limit the types of the touch panel and the display.

FIG. 5 is a flowchart of a method for environmental situation recognition and interaction according to an embodiment of the invention. Referring to FIG. 4 and FIG. 5 at the same time, the method of the embodiment is applicable to the environmental situation recognition and interaction apparatus 40 of FIG. 4. Detailed steps of the method for environmental situation recognition and interaction of the embodiment will be described below with reference of various components of the environmental situation recognition and interaction apparatus 40.

In step S502, the sound receiver 41 senses an ambient sound around the environmental situation recognition and interaction apparatus 40 to obtain an environmental audio, and the decibel meter 43 senses a sound volume of the ambient sound.

In step S504, the processing apparatus 45 loads the human voice filter module 142 from the storage device 42 to filter the human voices in the environmental audio through the human voice filter module 142. In step S506, the processing apparatus 45 is used to extract features from the filtered environmental audio. The above steps S504 and S506 are the same as or similar to the steps S304 and S306 of the aforementioned embodiment, so that details thereof will not be repeated here.

Different from the aforementioned embodiment, in the embodiment, in step S508, the processing apparatus 23 determines the environmental situation around the environmental situation recognition and interaction apparatus 40 according to the sensed sound volume and the mode of occurrence of the extracted features.

Where, in response to gradual decline of the sound volume and occurrence frequency of the features exceeding a predetermined value within a predetermined period, in step S510, the processing apparatus 45 determines that the current environmental situation is the in class situation, and in step S514, implements an interactive action corresponding to the in class situation. For example, the processing apparatus 45 may unlock the environmental situation recognition and interaction apparatus 40.

On the other hand, in response to a difference between a high and low sections of the sound volume exceeding a threshold value, and the occurrence frequency of the features exceeding the predetermined value within the predetermined period, in step S512, the processing apparatus 45 determines that the current environmental situation is the after class situation, and in step S514, implements an interactive action corresponding to the after class situation. For example, the processing apparatus 45 may lock the environmental situation recognition and interaction apparatus 40.

Through the above method, the environmental situation recognition and interaction apparatus 40 may determine the environmental situation by sensing changes of the environmental audio and the sound volume, and automatically implement the corresponding interactive action. In this way, customization of device functions may be realized.

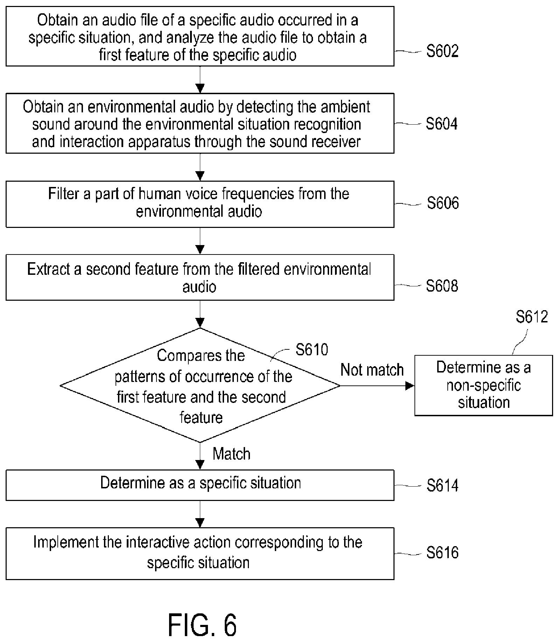

FIG. 6 is a flowchart of a method for environmental situation recognition and interaction according to an embodiment of the invention. Referring to FIG. 4 and FIG. 6 at the same time, the method of the embodiment is applicable to the environmental situation recognition and interaction apparatus 40 of FIG. 4. Detailed steps of the method for environmental situation recognition and interaction of the embodiment will be described below with reference of various components of the environmental situation recognition and interaction apparatus 40.

In step S602, the processing apparatus 45 obtains an audio file of a specific audio occurred in a specific situation, and analyzes the audio file to obtain at least one first feature of the specific audio. Where, the specific situation is, for example, a fire situation, and the audio file of the specific audio includes a sound of a fire alarm bell. In addition, the environmental situation recognition and interaction apparatus 40 further includes a universal serial bus (USB) transmission interface, etc. The processing apparatus 45 is, for example, connected to an external device through the USB transmission interface to obtain the audio file, or connected to a network through a network card or network device that supports Ethernet or supports wireless network standards such as 802.11g, 802.11n, and 802.11ac, etc., so as to obtain the audio file through the network, which is not limited by the invention. The audio file of the specific audio is formed by at least one of audios of a class bell, a siren, a metal collision sound, a table and chair friction sound, and an exhibition broadcasting sound. The external device is, for example, a computer device such as a mobile phone, a tablet computer, or a personal computer, etc.

In step S604, the sound receiver 41 is used to detect the ambient sound around the environmental situation recognition and interaction apparatus 40 to obtain an environmental audio, and in step S606, the processing apparatus 45 loads the human voice filter module 142 from the storage device 42, and human voices in the ambient audio is filtered by the human voice filter module 142. The above-mentioned steps S604 and S606 are the same or similar to the steps S302 and S304 of the aforementioned embodiment, and details thereof will not be repeated here.

Different from the aforementioned embodiments, in the embodiment, in step S608, the processing apparatus 45 extracts a second feature in the filtered environmental audio, and in step S610, the processing apparatus 45 compares the patterns of occurrence of the first feature and the second feature to determine whether the patterns of occurrences of the two features match. Wherein, the processing apparatus 45, for example, compares at least one of numbers of times, frequencies, peak values, interval time and durations of occurrence of the two features to determine whether the patterns of occurrence of the two features match.

If the processing apparatus 45 determines that the patterns of occurrence of the two features do not match, in step S612, it is determined that the current environmental situation is a nonspecific situation. On the contrary, if the processing apparatus 45 determines that the patterns of occurrence of the two features match, in step S614, it is determined that the current environmental situation is a specific situation, and in step S616, the processing apparatus 45 implements the interactive action corresponding to the specific situation.

For example, if the audio file obtained by the processing apparatus 45 is an audio file of a ringtone for start of class or end of class, when it is determined that the pattern of occurrence of the feature matches, it may be determined that the current environmental situation is the in class situation or after class situation. If the audio file obtained by the processing apparatus 45 is an audio file of a fire alarm, when it is determined that the pattern of occurrence of the feature matches, it may be determined that the current environmental situation is a fire alarm situation.

In some embodiments, the environmental situation recognition and interaction apparatus 40 has a learning function, and may learn audio features and user operation actions of various environmental situations, so as to automatically determine the environmental situation in practical applications.

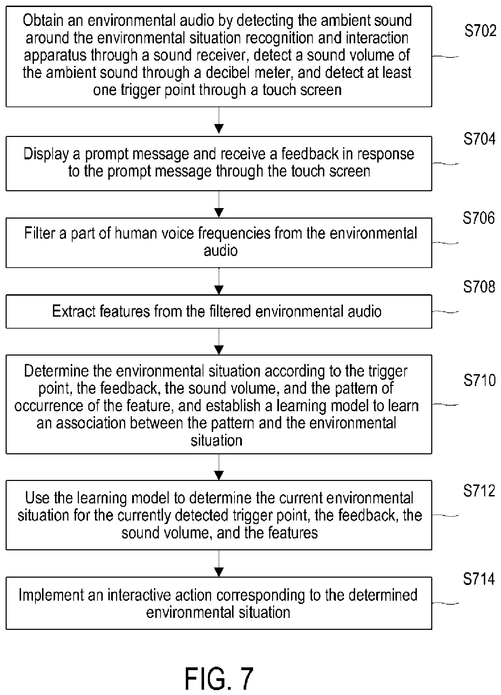

In detail, FIG. 7 is a flowchart of a method for environmental situation recognition and interaction according to an embodiment of the invention. Referring to FIG. 4 and FIG. 7 at the same time, the method of the embodiment is applicable to the environmental situation recognition and interaction apparatus 40 of FIG. 4. Detailed steps of the method for environmental situation recognition and interaction of the embodiment will be described below with reference of various components of the environmental situation recognition and interaction apparatus 40.

In step S702, the sound receiver 41 is used to detect the ambient sound around the environmental situation recognition and interaction apparatus 40 to obtain an environmental audio, the decibel meter 43 is used to detect a sound volume of the ambient sound, and the touch screen 44 is used to detect at least one trigger point. Where, the at least one trigger point sensed by the touch screen 44 is, for example, a position touched by the user on the touch screen 44, and the processing apparatus 45 may, for example, record the position and a frequency of the at least one trigger point sensed by the touch screen 44 in the memory device 42.

In step S704, the processing apparatus 45 uses the touch screen 44 to display a prompt message and receives a feedback in response to the prompt message. In detail, the processing apparatus 45, for example, displays a dialog box on the touch screen 44 to prompt a message when being turned on or when the touch screen 44 senses at least one trigger point, and simultaneously senses the feedback of the user in response to the prompt message. In some embodiments, the processing apparatus 45 may, for example, detect a number of times, a period, an interval, and a reaction time (i.e., a time from the prompt message to a touch detection) of the user's feedback (such as a touch, a slide, a drag, or other gestures) through the touch screen 44 after the prompt message.

In step S706, the sound receiver 41 is used to detect the ambient sound to obtain environmental audio, and in step S708, the processing apparatus 45 loads the human voice filter module 142 from the storage device 42 to filter the human voices in the environmental audio through the human voice filter module 142. The above steps S706 and S708 are the same as or similar to the steps S302 and S304 of the aforementioned embodiment, so that details thereof will not be repeated here.

Different from the aforementioned embodiments, in the embodiment, in step S710, the processing apparatus 45 determines the environmental situation according to the sensed at least one trigger point, the feedback, the sound volume and the pattern of occurrence of the feature, and establishes a learning model to learn an association between the above pattern and the environmental situation. The learning model is, for example, a learning module established by using an artificial neural network (ANN) such as a convolutional neural network (CNN), a recurrent neural network (RNN), a long/short term memory (LSTM) network, a generative adversarial network (GAN), a support vector machine (SVM), etc., which is not limited by the invention.

The processing apparatus 45 may, for example, repeatedly execute the above steps S702-S710 to train the learning model. In some embodiments, the processing apparatus 45 may, for example, increase or decrease a weight ratio of the learning model for determining the environmental situation according to the feedback sensed by the touch screen 44, so as to increase the accuracy of determining the environmental situation.

In step S712, the processing apparatus 45 uses the learning model to determine the current environmental situation for the currently sensed at least one trigger point, the feedback, the sound volume and the features. After training, the learning model has learned the association between the above-mentioned at least one trigger point, the feedback, the sound volume, the pattern of occurrence of the features and the environmental situation, so that after currently sensing the at least one trigger point, the feedback, the sound volume, the features, the processing apparatus 45 may obtain the determined environmental situation from the output of the learning model by inputting the sensed parameters into the learning model.

In step S714, the processing apparatus 45 is used to implement an interactive action corresponding to the determined environmental situation. The interactive action includes unlocking or locking the environmental situation recognition and interaction apparatus 40, or displaying a notification corresponding to the determined environmental situation by the environmental situation recognition and interaction apparatus 40, which is not limited here.

Through the above method, the environmental situation recognition and interaction apparatus 40 may learn the audio features in various environmental situations and the user's trigger and feedback operations, so as to automatically determine the current environmental situation and implement appropriate interactive actions.

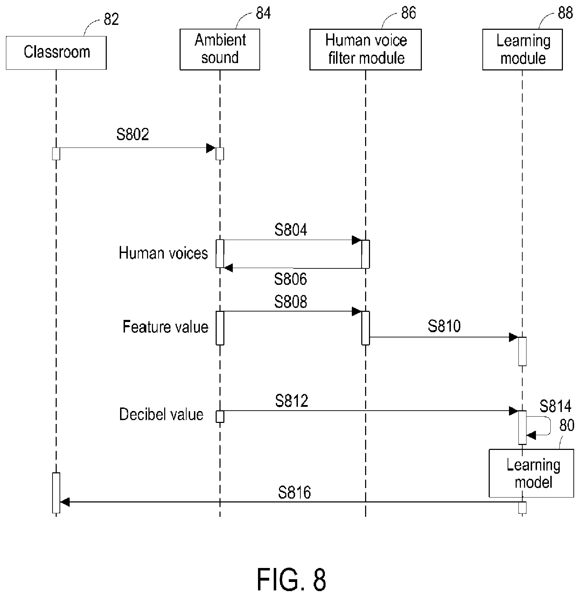

For example, FIG. 8 is a schematic diagram of a method for environmental situation recognition and interaction according to an embodiment of the invention. Referring to FIG. 8, the embodiment illustrates a process that the learning model learns the in class and after class situations.

In step S802, an ambient sound 84 in a classroom 82 is collected by a sound receiver.

In step S804, the ambient sound 84 including human voices is filtered by a processing module (human voice filter module) 86, and in step S806, the ambient sound 84 in which the human voices have been filtered is returned.

In step S808, a feature value (for example, representing the pattern of occurrence of the features: a number of times, a frequency, a peak value, an interval time, a duration or a combination thereof of occurrence of the features in the ambient sound 84) is extracted from the ambient sound 84, and in step S810, the feature value is provided to a learning model 88.

On the other hand, in step S812, a decibel value of the ambient sound 84 is provided to the learning module 88.

In step S814, the learning module 88 establishes and trains a learning model 80 through the obtained feature value (representing the pattern of occurrence of the features) and the decibel value, and provides the trained learning model to a device (such as an interactive flat panel display) in the classroom 82 in step S816 for recognizing the environmental situation and performing the interactive action.

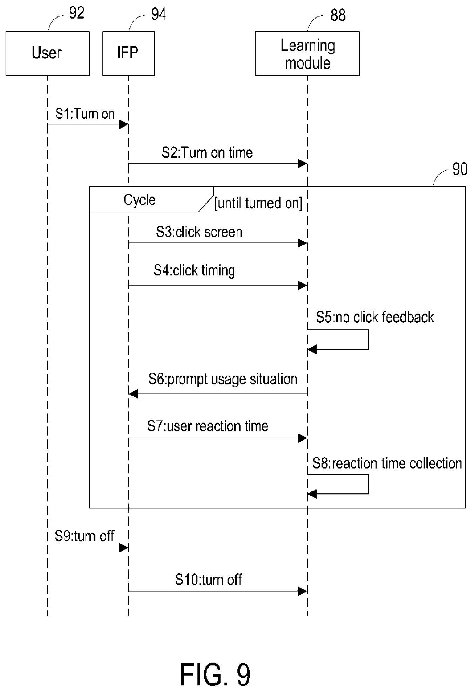

FIG. 9 is a schematic diagram of training a learning model according to an embodiment of the invention. Referring to FIG. 8 and FIG. 9 at the same time, the embodiment illustrates a training process of the learning model 80 in FIG. 8.

In step S1, a user 92 turns on an interactive flat panel (IFP) display 94.

In step S2, the IFP display 94 performs a power-on timing, and begins to detect a feedback of the user. Where, the IFP display 94 may, for example, prompt a message, and detect the feedback of the user in response to the prompt message.

Then, a cycle 90 of feedback collection is performed, and this cycle 90 will continue until the IFP display 94 is turned off. Namely, when the IFP display 94 is turned on, the feedback of the user is continuously collected.

In step S3, the IFP display 94 senses the feedback of the user's click on the screen, and in step S4, timings the click. The feedback and timing are provided to the learning module 88 as data for training the learning model 80.

In step S5, the learning module 88 suspends collecting the feedback when there is no click feedback (i.e., the timing stops), and in step S6, the IFP display 94 prompts the user with a usage situation.

In step S7, the IFP display 94 senses a reaction time of the user for the usage situation it prompts, and in step S8, the learning module 88 collects the reaction time provided by the IFP display 94. Where, the learning module 88 may use a number of times, a period, an interval, and a time of the user's feedback to adjust a weight ratio of the learning model 80 to recognize the environmental situation, so that the trained learning model 80 may accurately evaluate the environmental situation of each time point.

In a state of not being turned off, the IFP display 94 and the learning module 88 will continue to carry out the cycle 90 of feedback collection, so as to collect the feedbacks of the user in different usage situations and environmental situations to serve as bases for the learning module 88 to train the learning model 80.

Finally, in step S9, the user 92 turns off the IFP display 94, and in step S10, the IFP display 94 turns off the learning module 88. That is, the IFP display 94 will be turned off after turning off the learning module 88.

In summary, the method and apparatus for the environmental situation recognition and interaction of the embodiments of the invention combine audio recognition and environmental situation recognition, and set corresponding interactive functions to provide customized audio recognition functions. In addition, the embodiment of the invention also provides a learning function, by learning the changes of the environmental audio and the user's feedback, the environmental situation may be determined more accurately, so as to implement appropriate interactive actions.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A method for environmental situation recognition and interaction, adapted to an environmental situation recognition and interaction apparatus (20), the environmental situation recognition and interaction apparatus (20) comprising: a processing apparatus (23), a sound receiver (21) and a display, and the method comprising:
obtaining (S302) an environmental audio by detecting an ambient sound around the environmental situation recognition and interaction apparatus (20) through the sound receiver (21);
controlling (S304, S306, S308), through the processing apparatus (23), the environmental situation recognition and interaction apparatus (20) to implement at least one interactive action corresponding to at least one environmental situation according to the environmental audio; and
displaying (S310) a setting interface by the display and setting the at least one environmental situation and the at least one interactive action in the at least one environmental situation through the setting interface.

2. The method according to claim 1, further comprising:
filtering (S304) human voices from the environmental audio through the processing apparatus (23);
extracting (S306) a feature from the filtered environmental audio through the processing apparatus (23); and
determining (S308), through the processing apparatus (23), the at least one environmental situation around the environmental situation recognition and interaction apparatus (20) based on a pattern of occurrence of the feature.

3. The method according to claim 2, wherein the environmental situation recognition and interaction apparatus (20) further comprises a decibel meter (124), and the method further comprises:
detecting a sound volume of the ambient sound through the decibel meter (124); and
determining the at least one environmental situation according to the sound volume and the pattern of occurrence of the feature through the processing apparatus (23).

4. The method according to claim 3, wherein the step of determining the at least one environmental situation according to the sound volume and the pattern of occurrence of the feature comprises:
determining the at least one environmental situation to be an in class situation in response to gradual decrease of the sound volume and an occurrence frequency of the feature exceeding a predetermined value within a predetermined period; and
determining the at least one environmental situation to be an after class situation in response to a difference between a high and low sections of the sound volume exceeding a threshold value, and the occurrence frequency of the feature exceeding the predetermined value within the predetermined period.

5. The method according to any one of the preceding claims, wherein the environmental situation recognition and interaction apparatus (20) further comprises a touch panel, wherein a touch screen comprises the touch panel and the display, and the method further comprises:
detecting at least one trigger point through the touch screen;
determining the at least one environmental situation according to the at least one trigger point, the sound volume, and the pattern of occurrence of the feature, and establishing a learning model through the processing apparatus (23); and
using the learning model to determine a current environmental situation according to the currently detected at least one trigger point, the sound volume, and the pattern of occurrence of the feature.

6. The method according to claim 5, further comprising:
displaying a prompt message and receiving a feedback in response to the prompt message through the touch screen;
determining the at least one environmental situation according to the at least one trigger point, the feedback, the sound volume, and the pattern of occurrence of the feature, and establishing the learning model through the processing apparatus; and
using the learning model to determine the current environmental situation according to the currently detected at least one trigger point, the feedback, the sound volume, and the feature.

7. The method according to any one of the preceding claims 2-6, further comprising:
obtaining (S602) an audio file of a specific audio, and analyzing the audio file to obtain a first feature of the specific audio; and
comparing (S610) a pattern of occurrence of a second feature with a pattern of occurrence of the first feature, and determining (S614) that the at least one environmental situation is a specific situation when a comparison result is matched, wherein the second feature is the pattern of occurrence of the feature.

8. The method according to any one of the preceding claims 2 -7, wherein the pattern of occurrence of the feature comprises at least one of a number of times, a frequency, a peak value, an interval time, and a duration of occurrence of the feature.

9. The method according to any one of the preceding claims, wherein the at least one interactive action comprises unlocking or locking the environmental situation recognition and interaction apparatus, or displaying a notification.

10. An environmental situation recognition and interaction apparatus, comprising:
a sound receiver (21), configured to detect an ambient sound around the environmental situation recognition and interaction apparatus (20) to obtain an environmental audio;
a processing apparatus (23), electrically coupled to the sound receiver (21), and configured to control the environmental situation recognition and interaction apparatus (20) to implement at least one interactive action corresponding to at least one environmental situation according to the environmental audio; and
a display, electrically coupled to the processing apparatus (23), configured to display a setting interface, wherein the at least one environmental situation and the at least one interactive action in the at least one environmental situation are set by the setting interface.

11. The environmental situation recognition and interaction apparatus according to claim 10, further comprising:
a storage device (22), configured to storage a processing module, wherein
the processing apparatus (23) is electrically coupled to the storage device (22) and the processing apparatus (23) is configured to receive the environmental audio transmitted from the sound receiver (21), the processing apparatus (23) is configured to load the processing module, and the processing apparatus (23) is configured to filter human voices from the environmental audio and extract a feature from the filtered environmental audio, the processing apparatus (23) is configured to determine at least one environmental situation around the environmental situation recognition and interaction apparatus based on a pattern of occurrence of the feature.

12. The environmental situation recognition and interaction apparatus according to claim 10 or 11, further comprising:
a decibel meter (124) configured to detect a sound volume of the ambient sound, wherein
the processing apparatus (23) is configured to determine the at least one environmental situation according to the sound volume and the pattern of occurrence of the feature.

13. The environmental situation recognition and interaction apparatus according to claim 10, 11 or 12further comprising a touch screen configured to detect at least one trigger point, wherein the touch screen comprises a touch panel and the display.
